# EUROPÄISCHE PATENTSCHRIFT

(11) **EP 1 398 005 B1**
(45) Veröffentlichungstag und Bekanntmachung des Hinweises auf die Patenterteilung: **15.11.2006**
(21) Anmeldenummer: 03019294.2
(22) Anmeldetag: 26.08.2003
(51) Int. Cl.: A61C 19/00, H05K 1/18

(54) **Lichthärtgerät**
Light curing apparatus
Appareil de photopolymérisation

(30) Priorität: 12.09.2002 DE 10242366
(43) Veröffentlichungstag der Anmeldung: 17.03.2004
(73) Patentinhaber: Firma Ivoclar Vivadent AG, 9494 Schaan (LI)
(72) Erfinder: Plank, Wolfgang, 6830 Rankweil (AT)
(74) Vertreter: Baronetzky, Klaus

(56) Entgegenhaltungen:
- EP-A- 0 948 944
- US-A- 4 230 453
- US-A- 5 985 697
- US-B1- 6 200 134

## Beschreibung

Die Erfindung betrifft ein Lichthärtgerät zum Aushärten von lichthärtbaren Materialien, gemäß dem Oberbegriff von Anspruch 1.

Ein derartiges Lichthärtgerät ist seit langen bekannt, wobei beispielhaft auf die DE-PS 198 15 846 verwiesen sei. Derartige Lichthärtgeräte dienen zum Härten von lichthärtbaren Materialien, beispielsweise auch im Mund eines Patienten, und werden auch für die Aushärtung von lichtpolymerisierbaren Dentalmaterialien verwendet. Gedruckte Schaltungen lassen sich einsetzen, wenn es gilt, rasch und kosteneffizient einen Schaltungsaufbau zu realisieren. Bei der aus der DE-PS 198 15 846 bekannten Lösung verläuft eine Leiterplatte senkrecht zur Lichtaustrittsrichtung der Lichtquelle quer durch den Handgriff des Lichthärtgeräts. Auf der gedruckten Schaltung sind elektrische und elektronische Bauteile angeordnet, die teilweise auch Verlustleistung abgeben und daher Wärmequellen darstellen.

Lichthärtgeräte werden regelmäßig mit wärmeabgebenden Lichtquellen bestückt. Hierzu gehören Halogenlampen oder eine Mehrfachanordnung von LED-Chips verwendet. Die von der Lichtquelle abgegebenen Wärme wird regelmäßig durch ein Gebläse abgeführt, das im rückwärtigen Bereich des Laufs des pistolenförmigen Lichthärtgerät angeordnet ist.

Um die im Handgriff des Lichthärtgeräts montierten Bauteile, wie einen Längsregeltransistor für die Lichtquelle, kühlen zu können, ist es vorgeschlagen worden, an der Unterseite des Handgriffes zusätzliche Kühlluftschlitze anzubringen. Hierdurch soll ein Neben-Kühlluftstrom erzeugt werden, der mit dem Hauptkühlluftstrom vor dem Gebläse zusammengeführt wird. Diese Lösung hat jedoch verschiedene Nachteile.

Zum einen verlaufen der Haupt-Kühlluftstrom und der Neben-Kühlluftstrom nahezu senkrecht zueinander. Im Bereich der Zusammenführung entstehen damit zwangsläufig Turbulenzen, die den Strömungswirkungsgrad signifikant reduzieren.

Zwar könnten Umlenkrippen eingesetzt werden, um eine weniger turbulente Strömung anzustreben. In einem Handgerät steht jedoch relativ wenig Platz zur Verfügung, und zusätzliche Strömungsumlenkungsmaßnahmen würden die Baulänge des Gerätes verlängern, was unerwünscht ist. Wenn der Längsregeltransistor einfach auf der Leiterplatte montiert wird, ist die Kühlwirkung des Nebenluftstroms recht begrenzt, zumal der Neben-Kühlluftstrom nur mit geringer Stömungsgeschwindigkeit den Transistor überstreichen kann. Zwar besteht die Möglichkeit, an dem Transistor einen Kühlkörper zu montieren, so dass die Kühlwirkung deutlich verbessert wird. Ein derartiger Kühlkörper besteht meist aus Metall und erhöht das Gewicht des Lichthärtgeräts, was unerwünscht ist.

Die Verwendung einer derartigen Lösung ist dann ohnehin nicht möglich, wenn ein akkumulatorbestücktes Lichthärtgerät verwendet werden soll, dessen Energiequellen sich im Handgriff befinden, so dass die gesamte Elektronik im Übergangsbereich zwischen Handgriff und Lauf des Lichthärtgeräts untergebracht werden muss.

Demgegenüber liegt der Erfindung die Aufgabe zugrunde, ein Lichthärtgerät gemäß dem Oberbegriff von Anspruch 1 zu schaffen, das flexibler einsetzbar ist, einen verbesserten Wirkungsgrad erlaubt, aber dennoch mit kleinen Abmessungen auskommt.

Diese Aufgabe wird erfindungsgemäß durch Anspruch 1 gelöst. Vorteilhafte Weiterbildungen ergeben sich aus den Unteransprüchen.

Durch die Ausbildung der gedruckten Schaltung in erfindungsgemäß abgewinkelter oder abgebogener Form lässt sich die gesamte Leistungselektronik überraschend auch im Lauf des Lichthärtgeräts anbringen, so dass sie im Haupt-Kühlluftstrom zu liegen kommt. Damit kann der Neben-Kühlluftstrom vollständig entfallen, so dass die damit einhergehenden Probleme von vornherein vermieden werden. Der Kühlluftstrom kann daher im Wesentlichen umlenkungsfrei den Lauf des Lichthärtgeräts von den vorderen Kühlluftschlitzen zum Gebläse hindurchtreten. Hierdurch ist der Kühlwirkungsgrad verbessert, so dass ein Gebläse mit vergleichsweise geringer Leistung eingesetzt werden kann. Dies hat den Vorteil, dass der behandelnde Zahnarzt weniger stark dem Austritt von Warmluft ausgesetzt ist, und dass der Geräuschpegel des Gebläses sinkt.

Erfindungsgemäß besonders günstig ist es, wenn die gedruckte Schaltung mit der Elektronik sich dem Kühlkörper der Lichtquelle benachbart erstreckt. Durch die Erstreckung in Axialrichtung des Gebläseluftstroms und zugleich der Lichtquelle lässt sich trotz der beengten Platzverhältnisse die erforderliche Menge an elektronischen Bauteilen unterbringen. Auch bei der Verwendung einer biegsamen Trägerschicht für die gedruckte Schaltung ist die Erfindung nicht auf eine Single-Layer-Board beschränkt. Vielmehr kann durchaus die an sich bekannte Multilayertechnik zum Einsatz gelangen. In diesem Zusammenhang ist es besonders günstig, wenn die Lichtquelle in LED-Technik oder Niedervolt-Halogentechnik ausgebildet ist. Die verwendeten Spannungen liegen dann im unteren zweistelligen Voltbereich, so dass die Durchschlagsfestigkeit der Trägerschicht aus isoliertem Material ausgesprochen gering sein kann. Dies begünstigt andererseits die freie Formwahl der erfindungsgemäßen gedruckten Schaltung, denn dünnere Folienplatten lassen sich leichter abbiegen oder abknicken, ohne dass es zu Beeinträchtigungen des Materials oder gar Brüchen kommen würde.

Beispielsweise kann die Trägerschicht eine Stärke von lediglich 0,1 mm oder gar von 0,05 mm aufweisen, so dass sie in den Bereich der Stärke der Leiterbahnen gerät.

Es versteht sich, dass die Stärke und Breite der Leiterbahnen in an sich bekannter Weise an die Erfordernisse angepasst werden kann. Bevorzugt ist die Stärke der Leiterbahnen über die gesamte gedruckte Schaltung in jeder Schicht gleich, und typischerweise sind stromführende Leitungen wesentlich breiter als Signalleitungen ausgebildet.

Besonders günstig ist es auch, dass die Kühlrippen des erfindungsgemäßen Lichthärtgeräts zur Wärmeableitung auch der wärmeabgebenenden Bauteile der Elektronik des Lichthärtgeräts eingesetzt werden können. Der erfindungsgemäße Kühlkörper kann daher eine Doppelfunktion haben, nämlich einerseits der Kühlung der LED-Anordnung - oder gegebenenfalls der Halogenglühlampedienen, aber andererseits auch die Verlustwärme des Längsregeltransistors oder Thyristors oder dergleichen abführen, und dies, ohne dass zusätzlicher Platzbedarf im Handgriff des Lichthärtgeräts erforderlich wäre.

Der Handgriff des Lichthärtgeräts kann daher in beliebiger geeigneter Weise ausgestaltet werden, so dass das Lichthärtgerät im Grunde auch für Akkumulatorbetrieb geeignet ist.

Durch die erfindungsgemäße Montage der Wärmequelle der Elektronik auf dem Kühlkörper der- Lichtquelle lässt sich ein besonderer Effekt erzielen:
Bei geringer Lichtstärke gemäß Programmvorwahl des Benutzers gibt die Lichtquelle eine verminderte Leistung ab, so dass auch ihre Verlustleistung geringer ist. Ein Regeltransistor hat hingegen bei reduzierter Betriebsspannung der Lichtquelle die gröβere Verlustleistung. Wenn umgekehrt der Regeltransistor voll durchgeschaltet ist, reduziert sich seine Verlustleistung auf das Produkt aus Durchlassspannung und dem Betriebsstrom der Lichtquelle. Hingegen hat bei diesem Betriebszustand die Lichtquelle ihre maximale Leistung und gibt damit das Maximum an Verlustleistung ab. Die Summe der so erzeugten Verlustleistungen ist daher geringer als die Summe der Maxima, so dass es überraschend möglich ist, bei der Auslegung des Gebläses eine verminderte Gesamt-Wärmeabgabe zugrundezulegen.
Durch die biegsame Ausbildung der gedruckten Schaltung schmiegt sich die gedruckte Schaltung an die Profilierung des Kühlkörpers an, so dass die Herstellung und Montage ausgesprochen einfach ist. Bevorzugt ist eine Isolierschicht zwischen elektrisch leitenen Teilen der gedruckten Schaltung und dem Kühlkörper vorgesehen, die Kurzschlüsse verhindert. Die gedruckte Schaltung kann auch gut auf den Kühlkörper aufgeklebt werden, und es ist sowohl möglich, gedruckte Schaltungen mit Lötaugen als auch solchen SMD-Technik zu verwenden.
Erfindungsgemäß besonders günstig ist es, dass die gedruckte Schaltung bei Verwendung einer LED-Matrix als Lichtquelle ausgesprochen nah an die LED-Chips herangeführt werden kann. Hierdurch lassen sich die LED-Chips in Bondtechnik mit der gedruckten Schaltung verbinden. Diese Lösung hat auch den Vorteil, dass die Kunststoffumhüllung der LED-Chips, in die sie häufig eingegossen sind, entfallen kann. Anstelle dessen ist eine Abdeckscheibe, beispielsweise aus Quarzglas, vorgesehen, so dass die Wirkungsgradreduktion durch die Verwendung der Vergussmasse vor den LED-Chips verhindert werden kann. Dennoch lässt sich eine gekapselte und hermetisch abgeriegelte Ausgestaltung der LED-Matrix bereitstellen.
Weitere Vorteile, Einzelheiten und Merkmale ergeben sich aus der nachstehenden Beschreibung eines Ausführungsbeispiels der Erfindung anhand der Zeichnung.

### Es zeigen:

- Fig. 1: eine perspektivische Ansicht eines Kühlkörpers für ein erfindungsgemäßes Lichthärtgerät in einer Ausführungsform;
- Fig. 2: eine perspektivische Ansicht einer gedruckten Schaltung für das erfindungsgemäße Lichthärtgerät gemäß Fig. 1;
- Fig. 3: eine Darstellung eines Substratkörpers zur Aufnahme einer Lichtquelle für das Lichthärtgerät gemäß Fig. 1;
- Fig. 4: der Substratkörper mit den LED-Chips gemäß Fig. 3, wobei zusätzlich eine Abdeckscheibe angebracht ist;
- Fig. 5: die montierte Einheit aus ersten und zweiten Kühlkörper, gedruckter Schaltung und Lichtquelle für die Verwendung in der Ausführungsform des erfindungsgemäßen Lichthärgeräts; und
- Fig. 6: das teilweise aufgebrochene Lichthärtgerät in der Ausführungsform, wobei die montierte Einheit bereits einge baut ist.

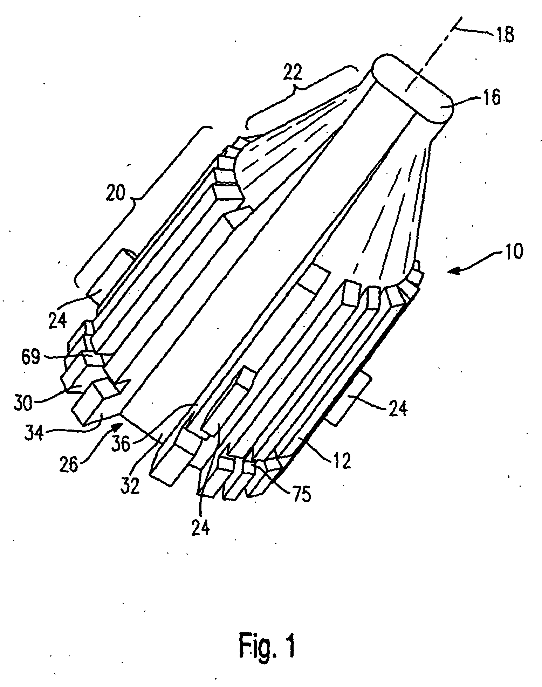

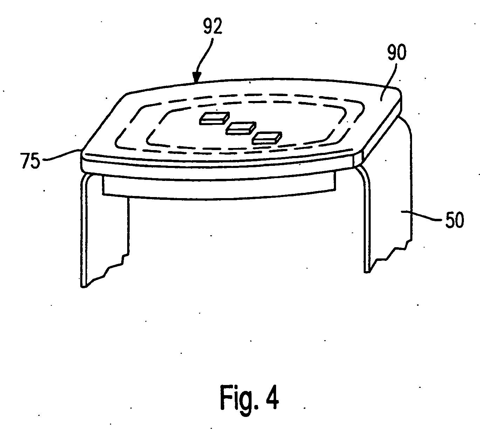

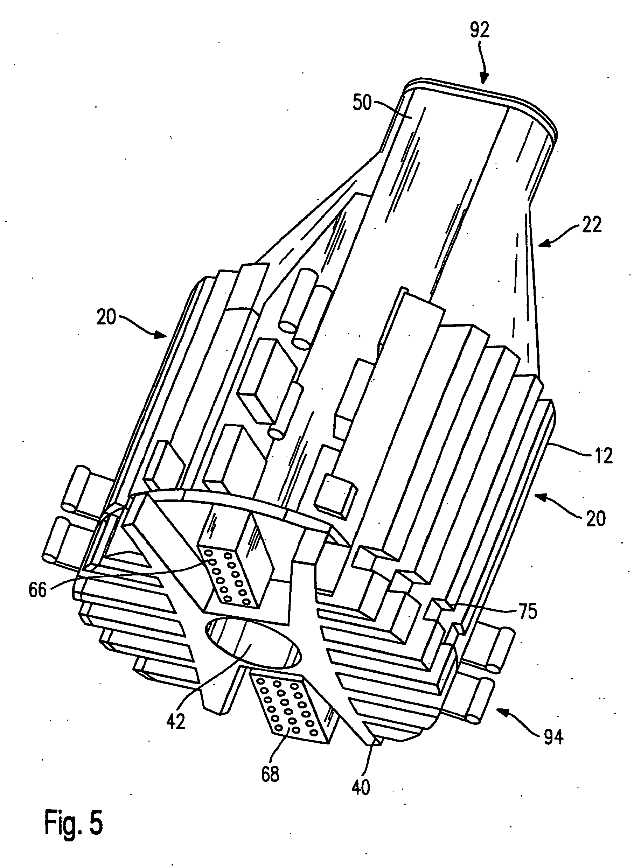

In Fig. 1 ist ein erster Kühlkörper 10 als Teil eines erfindungsgemäßen Lichthärtgeräts in einer erfindungsgemäßen Ausführungsform dargestellt. Der Kühlkörper 10 weist eine Vielzahl von Kühlrippen 12 auf, die sich parallel zu seiner Längsachse 18 erstrecken. Am vorderen Ende des Kühlkörpers 10 ist eine Lichtquelle 16 angebracht, deren Ausgestaltung aus Fig. 4 und Fig. 5 besser ersichtlich ist. Die Lichtquelle sendet Lichtstrahlung zur Lichthärtung von Polymermassen ebenfalls in Richtung der Achse 18 aus.

Der Kühlkörper 10 weist einen rückwärtigen, im Wesentlichen zylindrischen Bereich 20 und einen vorderen konischen Bereich 22 auf. In an sich bekannter Weise ist der konische Bereich zusammen mit der Lichtquelle 16 in einem entsprechend geformten Teil eines Gehäuses des Lichthärtgeräts aufgenommen, wozu auf die deutsche Patentanmeldung 101 27 416 vollinhaltlich Bezug genommen wird. Der zylindrische Bereich ist ebenfalls in einem entsprechend geformten Teil des Gehäuses aufgenommen. Zur Abstützung sind vier gleichmäßig um den Umfang verteilte Stützelemente 24 vorgesehen, die den Kühlkörper 10 fest in dem Gehäuse lagern.

Erfindungsgemäß ist der Kühlkörper 10 mit zwei einander gegenüberliegenden Kanälen versehen, von denen ein Kanal 26 aus Fig. 1 ersichtlich ist. Die Ausgestaltung des gegenüberliegenden Kanals 28 ist symmetrisch zum Kanal 26. Jeder Kanal 26, 28 erstreckt sich sowohl über den konischen Bereich 22 als auch über den zylindrischen Bereich 20 parallel zur Achse 18 und damit neben den Kühlrippen 12. Während zwischen den Kühlrippen Nuten 30 ausgebildet sind, deren Breite lediglich etwas größer als die Breite einer Kühlrippe selbst ist oder dieser entspricht, sind die Kanäle 26 und 28 wesentlich breiter.

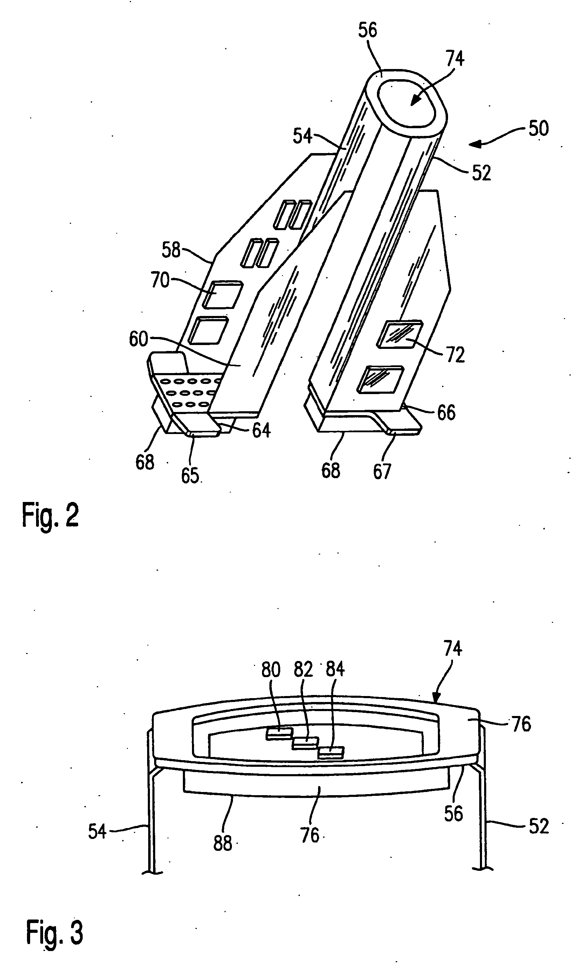

Jeder Kanal 26 und 28 dient zur Aufnahme der erfindungsgemäßen gedruckten Schaltung. Erfindungsgemäß kann die gedruckte Schaltung flexibel und auch mehrteilig sein, wobei es jedoch bevorzugt ist, dass sie einteilig ausgebildet ist und den aus Fig. 2 ersichtlichen Aufbau hat.

Jeder Kanal 26 und 28 weist einen Boden 32 und zwei Seitenflanken 34 und 36 auf, wobei die Seitenflanken 34 und 36 nach außen hin leicht voneinander divergieren. Durch diese Ausgestaltung lassen sich auf der gedruckten Schaltung Bauteile platzsparend und günstig anordnen, und die gedruckte Schaltung lässt sich gut in den derart ausgebildeten Kanal einbringen.

Der Kühlkörper 10 weist am hinteren Ende um seine Achse herum eine sacklochartige Ausnehmung 42 auf.

Aus Fig. 2 ist eine gedruckte Schaltung 50 in einer beispielhaften erfindungsgemäßen Ausgestaltung ersichtlich. In dieser Ausführungsform ist die gedruckte Schaltung 50 einstückig, wobei es sich versteht, dass es anstelle dessen auch möglich ist, eine mehrstückige Ausgestaltung zu wählen und die einzelnen Teile der gedruckten Schaltung über Lötverbindungen oder gegebenenfalls Steckverbindungen miteinander zu verbinden.

Erfindungsgemäß ist die gedruckte Schaltung 50 als ein 3-dimensionales Gebilde vorgeformt. Die Herstellung der gedruckten Schaltung selbst und auch die Bestückung erfolgt in üblicher Weise, also während die gedruckte Schaltung 50 sich noch plan erstreckt. Durch geeignete Abkantmittel wird dann die aus Fig. 4 ersichtliche Form erzeugt. In dieser Form besteht die gedruckte Schaltung 50 aus zwei Hauptstreifen 52 und 54, die über einen Verbindungsring 56 miteinander verbunden sind. Von jedem Hauptstreifen 52 und 54 erstrecken sich je zwei Flügel 58 und 60 weg, in einem Winkel, der dem Winkel der Seitenflanken 34 und 36 zu dem Boden 32 des Kanals 26 entspricht.

Am hinteren Ende des Hauptstreifens 52 und 54 ist je ein abgewinkelter Bereich 64 und 66 vorgesehen, der je ein Steckelement 66 und 68 trägt. Zwischen dem abgewinkelten Bereich 64, 66 und dem Steckelement 66, 68 sind Anschlageelemente 65 und 67 vorgesehen, welche der axialen Abstützung der Steckelemente 66, 68 dienen. Die Anschlageelemente 65, 67 ragen seitlich in eine umlaufende Nut 69 des Kühlkörpers, die im hinteren Bereich der Kühlrippen angeordnet ist. Die axiale Länge dieser Nut 69 entspricht im Wesentlichen der Stärke der Anschlageelemente 65, 67. In dem dargestellten Ausführungsbeispiel ist die gedruckte Schaltung 50 überwiegend in SMD-Technik ausgebildet, während im Bereich der Steckelemente 66 und 68 Lötaugen vorgesehen sind.

Die gedruckte Schaltung 50 weist nicht dargestellte Leiterbahnen auf und trägt zahlreiche elektrische und elektronische Bauteile 70, wie es in Fig. 2 schematisch angedeutet ist. Soweit die Bauteile in SMD-Technik ausgebildet sind und auf der Oberfläche der Flügel 58 und 60 ausgebildet sind, ist es auch möglich, Durchbrechungen in der gedruckten Schaltung vorzusehen und die gedruckten Bauteile mit ihren Kühlflächen 72 bündig mit der Unterseite der gedruckten Schaltung 50 abschließen zu lassen. Diese Lösung erlaubt es, eine direkte Kühlung des betreffenden Bauteils über seine Kühlfläche 72 an der angrenzenden Kühlrippe des Kühlkörpers 10 zu gewährleisten.

Der eine axiale Durchbrechung 74 aufweisende Verbindungsring 56 verbindet die Hauptstreifen 52 und 54 miteinander.

Die Ausgestaltung des Verbindungsrings 56 im Einzelnen zur Aufnahme der Lichtquelle ist aus Fig. 3 besser ersichtlich.

Der Verbindungsring 56 trägt an seiner Unterseite einen scheibenförmigen Substratkörper 76. Der Substratkörper 76 nimmt an seiner Oberseite eine Mehrzahl von LED-Chips auf, von denen drei Chips 80, 82 und 84 dargestellt sind. Auch wenn lediglich drei Chips dargestellt sind, versteht es sich, dass tatsächlich ein Vielzahl von Chips die Oberfläche des Substratkörpers 76 bedeckt und eine matrixartige Anordnung vorgesehen ist.

Der Substratkörper 76 besteht aus einem gut wärmeleitenden Metall und weist eine Außenform 88 auf, die größer als die innere Ausgestaltung der Durchbrechung 74 ist. Der Substratkörper 76 ist an der Unterseite des Verbindungsrings 56 angeklebt, kann aber auch in beliebiger anderer Weise befestigt sein, z.B. durch Einklemmen.

Es versteht sich, dass die LED-Chips in an sich bekannter Weise elektrisch gegenüber dem metallischen Substratkörper 76 isoliert sind, beispielsweise durch eine dünne Siliziumoxidschicht.

Bevorzugt werden bondbare Chips verwendet, die mit nicht dargestelten Bonddrähten mit entsprechenden Anschlussflächen oder Bondpads auf der gedruckten Schaltung 50 angeschlossen sind. Hier ist die Realisierung recht kurzer Bonddrähte möglich, gerade auch, wenn eine ovale Form für die Durchbrechung und den Substratkörper 76 gewählt ist.

Für den Schutz der Chips vor Verunreinigungen ist es bevorzugt, eine Abdeckscheibe 90 zu verwenden, die in Fig. 5 dargestellt ist und beispielsweise aus einem hochtransparenten Quarzglas bestehen kann. Die Abdeckscheibe 90 ist bevorzugt auf dem Substratkörper 76 aufgeklebt, so dass sich eine geschlossene Einheit ergibt, die im Bedarfsfall auch vollständig ausgetauscht werden kann. Zwischen der Vorderseite des Verbindungsrings 56 und der Abdeckscheibe 80 kann ein nicht dargestellter Distanzring 75 angeordnet sein, mit dem ein Abstand zwischen den Chips und der Abdeckscheibe 90 erreicht werden kann.

Es versteht sich, dass der Anschluss der LED-Matrix, die die Lichtquelle 92 bildet, an die gedruckte Schaltung 50 in beliebiger geeigneter Weise erfolgen kann. Beispielsweise ist ein direktes Auflöten möglich. Es kann auch eine kleine Tochterplatine verwendet werden, die steckbar auf der gedruckten Schaltung gelagert und Teil der Lichtquelle ist.

Erfindungsgemäß günstig ist es auch, dass durch das Einstecken des Substratkörpers 76 in die Durchbrechung 74 eine automatisch korrekte Ausrichtung der Lichtquelle erzeugt wird, so dass eine Nachjustage entbehrlich ist.

Aus Fig. 5 ist eine montierte Einheit 54 ersichtlich, die aus dem Kühlkörper 10, der Lichtquelle 92 und der gedruckten Schaltung 50 besteht. Wie ersichtlich ist, ergibt sich eine ausgesprochen kompakte Einheit 94. Durch die intensive Durchströmung der recht tief gehaltenen Kühlrippen 12 ergibt sich eine gute Kühlwirkung. Bevorzugt sind die Nuten 30 dem konischen Bereich 22 benachbart etwas weniger tief und weisen ihre maximale Tiefe am hinteren Ende des Kühlkörpers 10 auf. Hierdurch ist die Strömungsgeschwindigkeit der Kühlluft am Übergang zwischen dem konischen Bereich 22 und dem zylindrischen Bereich 20 besonders groß und im rückwärtigen Bereich geringer, so dass dort eine längere Verweildauer der Kühlluft an den Kühlrippen 12 besteht.

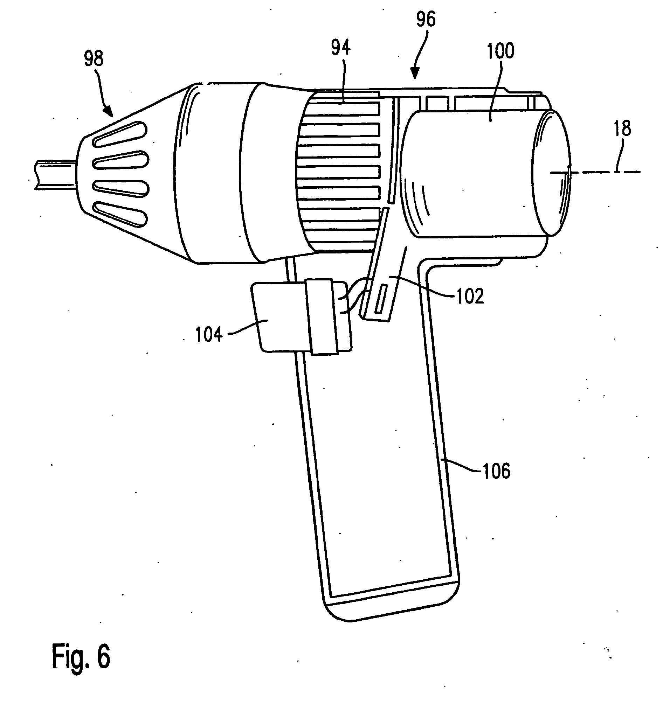

Aus Fig. 6 ist eine Ausführungsform eines erfindungsgemäßen Lichthärtgeräts 96 mit der eingebauten und montierten Einheit 94 ersichtlich. In an sich bekannter Weise sind am Gehäuse in dem den konischen Bereich 22 umgeben den Bereich Kühlluftschlitze 98 vorgesehen, durch die die Kühlluft einströmt. Sie strömt entlang der Achse 18 an der Einheit 94 entlang und wird durch ein Gebläse 100 ausgeworfen.

Aus Fig. 6 ist ersichtlich, dass die Einheit 94 mit der dortigen und aus Fig. 6 nicht ersichtlichen gedruckten Schaltung an eine weitere gedruckte Schaltung 102 angeschlossen ist. Die Verbindung erfolgt bevorzugt über Buchsen, die den Steckelementen 66 und 68 entsprechen. Die gedruckte Schaltung 102 dient dem Anschluss des Gebläsemotors und der Lichtquelle, aber auch der Elektronik auf der gedruckten Schaltung 50 an die Stromversorgung und auch dem Anschluss an einen Finger-Druckschalter 104. Die Stromversorgung kann entweder durch Akkumulatoren gebildet werden, die in an sich bekannter Weise im Handgriff 106 des Lichthärtgeräts 96 aufgenommen sind, oder ein Verbindungskabel erstreckt sich unten aus dem Handgriff 106 heraus zu einer Basisstation des Lichthärtgeräts 96, die die Spannungsversorgung gewährleistet.

Es versteht sich, dass die gedruckte Schaltung 102 in beliebiger geeigneter Weise ausgestaltet sein kann. Sie kann sich auch quer durch den Handgriff 106 unten durch erstrecken und unten einen Lagerpunkt für das Anschlusskabel bilden.

Während die hier beschriebene Ausführungsform einen Kühlkörper 10 aufweist, an dem entlang sich die gedruckte Schaltung 50 erstreckt, versteht es sich, dass es bei Bedarf auch ohne Weiteres möglich ist, den Kühlkörper als mehrteiligen Kühlkörper auszubilden, wobei sich eine Teilungslinie beispielsweise entlang der Nut 69 erstrecken kann.

## Patentansprüche

1. Lichthärtgerät zum Aushärten von lichthärtbaren Materialien, das eine gedruckte Schaltung aufweist, **dadurch gekennzeichnet, dass** die gedruckte Schaltung (50) eine Trägerschicht aus isolierendem Material aufweist, die biegsam ausgebildet ist und auf oder in der sich Leiterbahnen voneinander beabstandet erstrecken.

2. Lichthärtgerät nach Anspruch 1, **dadurch gekennzeichnet, dass** die gedruckte Schaltung (50) sich entlang eines Kühlkörpers (10) erstreckt.

3. Lichthärtgerät nach einem der vorhergehenden Ansprüche, **dadurch gekennzeichnet, dass** die gedruckte Schaltung (50) in beliebige Richtungen verformbar ist und insbesondere einen Biegeradius von weniger als einen Zentimeter, bevorzugt weniger als einen Millimeter aufweist.

4. Lichthärtgerät nach einem der vorhergehenden Ansprüche, **dadurch gekennzeichnet, dass** die gedruckte Schaltung (50) folienartig ausgebildet ist und eine Stärke von 50µm bis 500µm, insbesondere von etwa 100µm aufweist.

5. Lichthärtgerät nach einem der vorhergehenden Ansprüche, **dadurch gekennzeichnet, dass** die Stärke der Leiterbahnen größer als die Stärke der Trägerschicht ist und insbesondere etwa 75µm beträgt.

6. Lichthärtgerät nach einem der vorhergehenden Ansprüche, **dadurch gekennzeichnet, dass** die Lichtquelle (16) LED-Chips (80, 82, 84) aufweist, die der Stirnseite eines Kühlkörpers (10) benachbart angebracht sind und thermisch mit dem Kühlkörper (10) verbunden sind und dass die LED-Chips (80, 82, 84) elektrisch mit der gedruckten Schaltung (50) verbunden sind.

7. Lichthärtgerät nach einem der vorhergehenden Ansprüche, **dadurch gekennzeichnet, dass** der Kühlkörper (10) sich parallel zur Längserstreckung des Kühlkörpers erstreckende Kühlrippen (12) aufweist, und dass die gedruckte Schaltung (50) sich wenigstens teilweise in einem von zwei Kühlrippen begrenzten Kanal (26, 28) erstreckt.

8. Lichthärtgerät nach einem der vorhergehenden Ansprüche, **dadurch gekennzeichnet, dass** die gedruckte Schaltung (50) in dem Kanal (26, 28) des Kühlkörpers (10) befestigt ist.

9. Lichthärtgerät nach einem der vorhergehenden Ansprüche, **dadurch gekennzeichnet, dass** die gedruckte Schaltung (50) mit dem Boden (32) oder Nutengrund des Kanals und/oder den Kühlrippen (12) thermisch verbunden ist.

10. Lichthärtgerät nach einem der vorhergehenden Ansprüche, **dadurch gekennzeichnet, dass** die gedruckte Schaltung (50) in einem von der Lichtquelle abgewandten Endbereich des Kühlkörpers mindestens einmal abgewinkelt oder abgebogen ist.

11. Lichthärtgerät nach einem der vorhergehenden Ansprüche, **dadurch gekennzeichnet, dass** der im Wesentlichen rechtwinkelig abgebogene oder abgewinkelte Teil der elektrischen Schaltung ein Steckelement (24) trägt, desen Steckrichtung sich im Wesentlichen parallel zur Lichtaustrittsrichtung der Lichtquelle (16) erstreckt.

12. Lichthärtgerät nach einem der vorhergehenden Ansprüche, **dadurch gekennzeichnet, dass** die gedruckte Schaltung (50) im Querschnitt U-förmig ausgebildet ist.

13. Lichthärtgerät nach einem der vorhergehenden Ansprüche, **dadurch gekennzeichnet, dass** der Kühlkörper (10) aus einem Strangpressprofil ausgebildet ist, das in seinem vorderen Bereich zur Bildung eines Kühlkonus spanabhebend bearbeitet, insbesondere abgedreht ist.

14. Lichthärtgerät nach einem der vorhergehenden Ansprüche, **dadurch gekennzeichnet, dass** die gedruckte Schaltung (50) mit einer Isolierschicht überzogen ist, die eine elektrische Isolierung zu dem Kühlkörper hin bietet.

15. Lichthärtgerät nach einem der vorhergehenden Ansprüche, **dadurch gekennzeichnet, dass** die gedruckte Schaltung (50) im Bereich der Lichtquelle eine axiale Durchbrechung (74) aufweist.

16. Lichthärtgerät nach einem der vorhergehenden Ansprüche, **dadurch gekennzeichnet, dass** ein scheibenförmiger Substratkörper (76) die LED-Chips (80, 82, 84) aufnimmt, der thermisch mit dem Kühlkörper (10), der gedruckten Schaltung (50) und den LED-Chips (80, 82, 84) intensiv verbunden ist.

17. Lichthärtgerät nach einem der vorhergehenden Ansprüche, **dadurch gekennzeichnet, dass** die LED-Chips (80, 82, 84) auf einem Substratkörper (76) mit geeigneten Verbindungsdrähten, insbesondere Bonddrähten, mit der gedruckten Schaltung (50) verbunden sind, der Substratkörper (76) zwischen dem Kühlkörper und der elektrischen Schaltung angeordnet ist und insbesondere von einer transparenten Abdeckscheibe (90) abgedeckt ist.

18. Lichthärtgerät nach einem der vorhergehenden Ansprüche, **dadurch gekennzeichnet, dass** die gedruckte Schaltung (50) auch verlustleistungsabgebende elektronische Bauteile (54) wie Halbleiter und passive Bauelemente aufweist, deren Kühlflächen (72) thermisch mit dem Kühlkörper (10) intensiv verbunden sind.

19. Lichthärtgerät nach einem der vorhergehenden Ansprüche, **dadurch gekennzeichnet, dass** ein Anschlagelement (65, 67) der axialen Abstützung der Steckelemente (24) an dem Kühlkörper (10) dient.

20. Lichthärtgerät nach einem der vorhergehenden Ansprüche, **dadurch gekennzeichnet, dass** das Lichthärtgerät (96) als Handstück ausgebildet ist und einen Handgriff (106) aufweist, der Energiequellen wie Akkumulatoren oder eine Anschlussvorrichtung für ein Speisekabel aufnimmt.

## Claims

1. A light-curing apparatus for curing light-curable materials, which has a printed circuit, **characterised in that** the printed circuit (50) has a substrate of insulating material which is of flexible form and on which or in which extend spaced-apart conductor tracks.

2. A light-curing apparatus according to Claim 1, **characterised in that** the printed circuit (50) extends along a cooling body (10).

3. A light-curing apparatus according to one of the preceding Claims, **characterised in that** the printed circuit (50) is deformable in any direction desired and, in particular, has a bending radius of less than one centimetre, preferably less than one millimetre.

4. A light-curing apparatus according to any one of the preceding Claims, **characterised in that** the printed circuit (50) is of film-like form and has a thickness of 50 µm to 500 µm, in particular of approximately 100 µm.

5. A light-curing apparatus according to any one of the preceding Claims, **characterised in that** the thickness of the conductor tracks is greater than the thickness of the substrate and, in particular, is approximately 75 µm.

6. A light-curing apparatus according to any one of the preceding Claims, **characterised in that** the light source (16) has LED chips (80,82,84) which are mounted adjacent the end face of a cooling body (10) and are thermally connected with the cooling body (10), and **in that** the LED chips (80,82,84) are connected electrically to the printed circuit (50).

7. A light-curing apparatus according to any one of the preceding Claims, **characterised in that** the cooling body (10) has cooling fins (12) extending parallel to the longitudinal extension of the cooling body, and **in that** the printed circuit (50) extends at least partly in a channel (26,28) bounded by two cooling fins.

8. A light-curing apparatus according to any one of the preceding Claims, **characterised in that** the printed circuit (50) is mounted in the channel (26,28) of the cooling body (10).

9. A light-curing apparatus according to any one of the preceding Claims, **characterised in that** the printed circuit (50) is thermally connected with the bottom (32) or slot base of the channel and/or to the cooling fins (12).

10. A light-curing apparatus according to any one of the preceding Claims, **characterised in that** the printed circuit (50) is angled or bent at least once in an end zone of the cooling body remote from the light source.

11. A light-curing apparatus according to any one of the preceding Claims, **characterised in that** the part of the electrical circuit bent or angled substantially at right angles has a plug element (24), the plug-in direction of which extends substantially parallel to the light-outlet direction of the light source (16).

12. A light-curing apparatus according to any one of the preceding Claims, **characterised in that** the printed circuit (50) is U-shaped in cross-section.

13. A light-curing apparatus according to any one of the preceding Claims, **characterised in that** the cooling body (10) is formed from an extruded profile which in its front zone is machined, in particularly trued, to form a cooling cone.

14. A light-curing apparatus according to any one of the preceding Claims, **characterised in that** the printed circuit (50) is coated with an insulating layer which provides electrical insulation to the cooling body.

15. A light-curing apparatus according to any one of the preceding Claims, **characterised in that** the printed circuit (50) has an axial opening (74) in the vicinity of the light source.

16. A light-curing apparatus according to any one of the preceding Claims, **characterised in that** a plate-like substrate body (76) accommodates the LED chips (80,82,84), which is intensively connected thermally to the cooling body (10), the printed circuit (50) and the LED chips (80,82,84).

17. A light-curing apparatus according to any one of the preceding Claims, **characterised in that** the LED chips (80,82,84) on a substrate body (76) with suitable connecting wires, in particular bonding wires, are connected to the printed circuit (50), the substrate body (76) is disposed between the cooling body and the electrical circuit and, in particular, is covered by a transparent covering plate (90).

18. A light-curing apparatus according to any one of the preceding Claims, **characterised in that** the printed circuit (50) also have leakage-power dissipating electronic components (54), such as semiconductors and passive components, the cooling surfaces (72) of which are intensively connected thermally to the cooling body (10).

19. A light-curing apparatus according to any one of the preceding Claims, **characterised in that** a stop member (65,67) serves for the axial support of the plug elements (24) on the cooling body (10).

20. A light-curing apparatus according to any one of the preceding Claims, **characterised in that** the light-curing apparatus (96) is in the form of a hand-held device and has a handle (106) which accommodates accumulators or a connection means for a power cable.

## Revendications

1. Appareil de photo-polymérisation pour polymériser des matériaux polymérisables qui comprend un circuit imprimé, **caractérisé en ce que** le circuit imprimé (50) comporte une couche de support en matériau isolant qui est souple et sur ou dans laquelle des pistes conductrices s'étendent à distance les unes des autres.

2. Appareil de photo-polymérisation selon la revendication 1, **caractérisé en ce que** le circuit imprimé (50) s'étend le long d'un corps de refroidissement (10).

3. Appareil de photo-polymérisation selon l'une quelconque des revendications précédentes, **caractérisé en ce que** le circuit imprimé (50) est déformable dans n'importe quelles directions et, en particulier, **en ce qu'**il présente un angle de courbure de moins d'un centimètre, de préférence, de moins d'un millimètre.

4. Appareil de photo-polymérisation selon l'une quelconque des revendications précédentes, **caractérisé en ce que** le circuit imprimé (50) est conçu comme une feuille et présente un épaisseur comprise entre 50 µm et 500 µm, en particulier d'environ 100 µm.

5. Appareil de photo-polymérisation selon l'une quelconque des revendications précédentes, **caractérisé en ce que** l'épaisseur des pistes conductrices est supérieure à l'épaisseur de la couche de support et **en ce qu'**elle a, en particulier, une épaisseur d'environ 75 µm.

6. Appareil de photo-polymérisation selon l'une quelconque des revendications précédentes, **caractérisé en ce que** la source lumineuse (16) comporte des puces à diodes électroluminescentes (80, 82, 84) qui sont disposées à proximité de la face frontale d'un corps de refroidissement (10) et qui sont reliées thermiquement avec le corps de refroidissement (10) et **en ce que** les puces à diodes électroluminescentes (80, 82, 84) sont reliées électriquement au circuit imprimé (50).

7. Appareil de photo-polymérisation selon l'une quelconque des revendications précédentes, **caractérisé en ce que** le corps de refroidissement (10) comporte des ailettes de refroidissement (12) s'étendant parallèlement à l'extension longitudinale du corps de refroidissement et **en ce que** le circuit imprimé (50) s'étend au moins partiellement dans un conduit (26, 28) délimité par deux ailettes de refroidissement.

8. Appareil de photo-polymérisation selon l'une quelconque des revendications précédentes, **caractérisé en ce que** le circuit imprimé (50) est fixé dans le conduit (26, 28) du corps de refroidissement (10).

9. Appareil de photo-polymérisation selon l'une quelconque des revendications précédentes, **caractérisé en ce que** le circuit imprimé (50) est relié thermiquement au fond (32) ou au fond de rainure du conduit et/ou aux ailettes de refroidissement (12).

10. Appareil de photo-polymérisation selon l'une quelconque des revendications précédentes, **caractérisé en ce que** le circuit imprimé (50) est plié ou recourbé au moins une fois dans une zone d'extrémité du corps de refroidissement opposée à la source lumineuse.

11. Appareil de photo-polymérisation selon l'une quelconque des revendications précédentes, **caractérisé en ce que** la partie pliée ou recourbée sensiblement à angle droit du circuit électrique porte un élément enfichable (24) dont le sens d'enfichage s'étend sensiblement parallèlement à la direction de sortie de la lumière de la source lumineuse (16).

12. Appareil de photo-polymérisation selon l'une quelconque des revendications précédentes, **caractérisé en ce que** le circuit imprimé (50) présente une forme en U en section transversale.

13. Appareil de photo-polymérisation selon l'une quelconque des revendications précédentes, **caractérisé en ce que** le corps de refroidissement (10) est constitué d'un profilé extrudé qui est usiné par enlèvement de copeaux, en particulier décolleté, dans sa zone avant pour former un cône de refroidissement.

14. Appareil de photo-polymérisation selon l'une quelconque des revendications précédentes, **caractérisé en ce que** le circuit imprimé (50) est revêtu d'une couche isolante qui assure une isolation électrique vis-à-vis du corps de refroidissement.

15. Appareil de photo-polymérisation selon l'une quelconque des revendications précédentes, **caractérisé en ce que** le circuit imprimé (50) comporte un percement axial (74) dans la zone de la source lumineuse.

16. Appareil de photo-polymérisation selon l'une quelconque des revendications précédentes, **caractérisé en ce** les puces à diodes électroluminescentes (80, 82, 84) sont logées dans un corps de substrat (76) en forme de disque qui est intimement relié thermiquement avec le corps de refroidissement (10), le circuit imprimé (50) et les puces à diodes électroluminescentes (80, 82, 84).

17. Appareil de photo-polymérisation selon l'une quelconque des revendications précédentes, **caractérisé en ce que** les puces à diodes électroluminescentes (80, 82, 84) sont reliées au circuit imprimé (50) sur un corps de substrat (76) à l'aide de fils de liaison appropriés, en particulier des fils de connexion, **en ce que** le corps de substrat (76) est disposé entre le corps de refroidissement et le circuit électrique et, en particulier, **en ce qu'**il est recouvert par une vitre de capotage transparente (90).

18. Appareil de photo-polymérisation selon l'une quelconque des revendications précédentes, **caractérisé en ce que** le circuit imprimé (50) comporte également des composants électroniques à dissipation de puissance (54) tels que de semi-conducteurs et des composants passifs dont les surfaces de refroidissement (72) sont intimement reliées thermiquement au corps de refroidissement (10).

19. Appareil de photo-polymérisation selon l'une quelconque des revendications précédentes, **caractérisé en ce qu'**un élément de butée (65, 67) sert à l'appui axial des éléments enfichables (24) dans le corps de refroidissement (10).

20. Appareil de photo-polymérisation selon l'une quelconque des revendications précédentes, **caractérisé en ce que** l'appareil de photo-polymérisation (96) est conçu comme un appareil à main et comporte une poignée (106) dans laquelle sont logées des sources d'énergie telles que des accumulateurs ou un dispositif de raccordement pour un câble d'alimentation.
